# EUROPEAN PATENT SPECIFICATION

(11) **EP 2 551 847 B1**
(45) Date of publication and mention of the grant of the patent: **11.05.2016**
(21) Application number: 11863255.3
(22) Date of filing: 14.06.2011
(51) Int. Cl.: G10L 17/00, H04W 52/02, G10L 17/04, G10L 17/22

(54) **Method for reducing calling power consumption of mobile terminal and mobile terminal**
Verfahren zur Reduzierung des Anrufstromverbrauchs eines mobilen Endgeräts und mobiles Endgerät
Procédé de réduction de la consommation énergétique en mode appelant d'un terminal mobile, et terminal mobile

(30) Priority: 12.05.2011 CN 201110122338
(43) Date of publication of application: 30.01.2013
(73) Proprietor: ZTE Corporation, Shenzhen, Guangdong 518057 (CN)
(72) Inventor: CAI, Xiaoguang, Shenzhen City, Guangdong Province 518057 (CN); ZHAN, Ming, Shenzhen City, Guangdong Province 518057 (CN)
(74) Representative: Manitz, Finsterwald & Partner GbR
(86) International application number: PCT/CN2011/075722
(87) International publication number: WO 2012/151771

(56) References cited:
- EP-A2- 1 074 974
- WO-A1-2009/088496
- CN-A- 1 601 604
- CN-A- 101 083 809
- CN-A- 101 763 855
- US-A1- 2010 158 207
- US-B1- 7 676 026
- US-B2- 7 814 353

## Description

### Technical Field

The present invention relates to the field of mobile communication technology, and specifically, the invention relates to a method for reducing call power consumption of a mobile terminal and a mobile terminal. Relevant prior art is known from EP1074974A2, US7676026B1 or US7814353B2.

### Background of the Related Art

With the rapid development of the communication and microelectronic technology, functions of a mobile phone become richer. Besides a traditional voice call function, various functions such as video call, photograph, camera shooting, recording, music play, video play, mobile TV, net play and JAVA games and so on are integrated, and the power consumption is comparatively high when these functions are used. Currently, lithium ion battery is used to power most mobile phones. Capacity of the lithium ion battery is usually small, but mobile phone users often expect that the battery can be used for a long time after one time of charging, so a contradiction between fast electricity consumption of mobile phone and limited battery capacity is caused. How to reduce the power consumption of the mobile phone to extend the usage time of the battery after one-time charging becomes an important task. In the study of reducing the power consumption of the mobile phone, the voice call service becomes the most important aspect in the task of reducing the power consumption of the mobile phone as the voice call service is used frequently and has high power consumption.

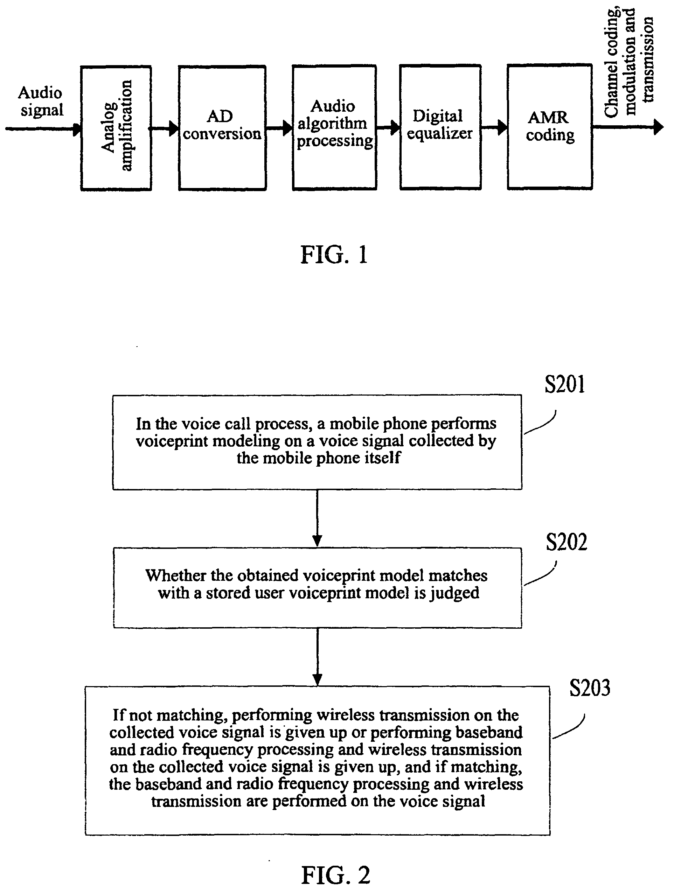

As shown in FIG. 1, the existing uplink data transmission flow of mobile phone voice calls is: an audio signal collected through an MIC of a mobile terminal going through the analog amplification processing (such as three-level analog amplification processing), then being converted through an Analog-to-Digital Converter, which is also called as an AD converter, into a Pulse-code modulation (PCM) numerical code stream, being processed through an audio frequency algorithm, then being filtered through an equalizer, then audio frequency Adaptive Multi-Rat (AMR) coding being performed after a digital gain, and finally being transmitted out through a radio frequency after going through processing such as channel coding and modulation and so on.

### Summary of the Invention

In a normal condition, making a call is an interaction process between the two parties, wherein one party always speaks in a certain time and listens to the other party in a certain time, therefore, voices required to be transmitted through mobile phones and networks are discontinuous. However, the environment of voice calls is relatively complicated, as besides the voice of a caller himself, voices of other people and other environmental noises around always exist. Although the existing audio algorithm has echo suppression and noise suppression, it can only perform the noise suppression processing on the voices when the caller is speaking. When the caller is not speaking, other voices in the ambient environment are still taken as valid data to be processed and transmitted, so no matter whether the caller is speaking or not, the voices processed and transmitted by the audio frequency algorithm are always continuous. It causes that a great quantity of unwanted voice data are collected, processed and transmitted by the mobile phones and the system needs to process a great quantity of additional data, which brings large power consumption of the baseband and radio frequency.

The object of the present invention is to provide a method and mobile terminal for reducing call power consumption of the mobile terminal, to solve the problem of how to reduce the power consumption of voice calls, save the battery electricity consumption of the mobile terminal, and reduce the transmission of invalid data.

In order to solve the above technical problem, the present invention provides a method for reducing call power consumption of a mobile terminal in accordance with claim 1.

Further aspects are defined in the dependent Claims:

In order to solve the above technical problem, the present invention further provides a mobile terminal for reducing call power consumption in accordance with claim 6.

Further aspects are defined in the dependent claims.

Compared with the related art, with the technical scheme of the present invention, voice call power consumption of the mobile terminal is reduced, battery usage time of the mobile terminal is extended, and user experience is enhanced. Moreover, since transmission of invalid data is reduced, system load is alleviated, effective utilization rate of system resources is improved, and power consumption of the baseband and radio frequency is reduced.

### Brief Description of Drawings

FIG. 1 is a traditional flow diagram of uplink voice processing of a mobile terminal voice call.
FIG. 2 is a flow diagram of uplink voice processing of a mobile phone voice call for reducing call power consumption in the example of the present invention.
FIG. 3 is a structure diagram of a mobile terminal for reducing call power consumption in the example of the present invention.
FIG. 4 is a flow diagram of uplink voice processing of a mobile phone voice call for reducing call power consumption in one application example.
FIG. 5 is a flow diagram of uplink voice processing of a mobile phone voice call for reducing call power consumption in another application example.
FIG. 6 is a flow diagram of uplink voice processing of a mobile phone voice call for reducing call power consumption in another application example.

### Preferred Embodiments of the Present Invention

In order to make the object, technical scheme and advantages of the present invention more clear, the examples of the present invention will be described in detail in combination with the accompanying drawings below. It should be noted that the examples in the present invention and the characteristics in the examples can be optionally combined with each other in the condition of no conflict.

As shown in FIG. 2, the example of the present invention provides a method for reducing call power consumption of a mobile terminal, a mobile phone is taken as an example, and the method includes following steps.

In S201, when a caller is on the phone, in a voice call process, the mobile phone performs voiceprint modeling on an audio signal collected by the mobile phone itself.

Wherein, the audio signal collected by the mobile phone itself refers to an audio signal collected by the mobile phone through an internal MIC, but not an audio signal received from an opposite terminal through the radio communication. The mobile phone uses the in-built MIC to collect audio signals, and no additional hardware device is required to be added, therefore, the system complexity is not increased, which is simple and practical.

Wherein, in the call process, the operation of performing voiceprint modeling is generally real-time, which is performed in a certain time interval, the time interval can be manually set by a user according to the use demand, and also can be defaulted in the mobile terminal.

The process of performing voiceprint modeling on the voice signal includes: after performing analog amplification, AD conversion and denoising operation on the collected audio signal, extracting voiceprint feature data from the denoised audio data, and then establishing the voiceprint model according to the extracted voiceprint feature data. Extracting the voiceprint feature data refers to extracting acoustic feature data or language feature data such as a cepstrum and so on with strong divisibility and high stability from the denoised audio data.

At the point, the established voiceprint model may be the voiceprint model of the caller, and also may be voiceprint models formed from voices of other speakers in the environment.

In S202, whether the obtained voiceprint model matches with a stored voiceprint model of the user is judged.

The speaker of the current voices can be confirmed through the model matching, and it can be determined whether the extracted voices are the voices of the caller, that is, whether the caller is speaking, and whether the voice data are valid data of the call.

Wherein, an establishment way of the stored voiceprint model of the user is any one or two of the following ways:
before a voice call starts, recording a voice segment of the user, and according to the voice segment, establishing and storing the voiceprint model of the user;
when the voice call starts, and after a voiceprint model establishment indication sent by the user is received, establishing and storing the voiceprint model of the user according to the collected audio signal.

The stored voiceprint model of the user comprises: a voiceprint model of the common user and a voiceprint model of the temporary user, the voiceprint model of the common user and voiceprint model of the temporary user are stored in a non-volatile memory of the mobile terminal; or, the voiceprint model of the common user is stored in the non-volatile memory of the mobile terminal, and the voiceprint model of the temporary user is stored in a one-time memory of the mobile terminal. Generally speaking, the voiceprint model stored in the non-volatile memory of the mobile phone will be saved permanently, and the voiceprint model stored in the one-time memory of the mobile phone or in one data structure will be automatically deleted by the mobile phone after a time and will not be saved permanently. In the above storage modes, the first storage mode is beneficial to guaranteeing the data security, and the second mode is beneficial to saving the storage space of the mobile phone and processing capacity.

In a general application situation, the user using the mobile phone only includes the owner of the mobile phone. When the mobile phone is in a non-call state, the owner of the mobile phone can record the voice segment of the user through the mobile phone, and the voiceprint model of the user can be established and stored according to the voice segment.

In other application situations, the user using the mobile phone not only includes the owner of the mobile phone, but also includes other users. A common user can be the owner of the mobile phone, and a temporary user can be a temporary borrower of the mobile phone. If what the caller is using is not his own mobile phone, or if a situation that the mobile phone needs to be transferred to another person who will talk to the other party of the conversation in the call process occurs, the voiceprint model establishment indication can be sent to the mobile phone in the way of key selection through a menu on the mobile phone during the conversation, and its own voiceprint model is established within a period of time when the conversation just starts and stored in the mobile phone, and is taken as a reference voiceprint model for the subsequent model matching. For example, a certain keypad used to establish and store the voiceprint model of the current caller is set, and then after the current caller presses the keypad, the mobile phone receives the voiceprint model establishment indication sent by the user. The user sends a segment of voice used for modeling after pressing the keypad, and the mobile phone automatically intercepts the voice from the beginning of receiving the voiceprint model establishment indication to a later preset time length (e.g. 10 seconds) so as to establish and store the voiceprint model of the user, or, the user also can control the end time of the voice. For example, after the user sends the segment of voice, the mobile phone is indicated by keypad selection though the menu on the mobile phone during the conversation that the voice for modeling ends, and then the mobile phone establishes and stores the voiceprint model of the user according to the voice from the time of receiving the voiceprint model establishment indication to the time of receiving a voiceprint model establishment end indication.

Certainly, in the specific implementation, other methods also can be used to confirm the common user. For example, a public terminal can determine one or multiple common users and one or multiple temporary users voluntarily.

In the example, the model matching refers to performing similarity matching on the voiceprint model established according to the extracted voiceprint feature data and the voiceprint model stored in the mobile phone. A common method includes: a probability statistics method, a dynamic time warping method and a neural network method and so on. In the specific implementation, whether a matching degree between the voiceprint model established according to the extracted voiceprint feature data and the reference voiceprint model stored in the mobile phone reaches a certain preset threshold can be judged through a distance measurement algorithm. If the matching degree between the voiceprint model established according to the extracted voiceprint feature data and the reference voiceprint model stored in the mobile phone reaches the certain preset threshold, it is matching, and if the matching degree between the voiceprint model established according to the extracted voiceprint feature data and the reference voiceprint model stored in the mobile phone does not reach the certain preset threshold, it is not matching. Generally, the threshold can be adjusted according to the practical situation.

In S203, if not matching, performing wireless transmission on the collected voice signal is given up or performing baseband and radio frequency processing and wireless transmission on the collected voice signal is given up, and if matching, the baseband and radio frequency processing and wireless transmission are performed on the voice signal.

Specifically, in the example, if the matching is determined, it is considered that the extracted voices are the voices of the existing valid user, and the voice data thereof are valid data of the call and required to be processed and transmitted. If the matching is not determined, it is considered that the extracted voices are not the voices of the existing valid user, such as environmental sounds (including mute, or the voices of other people in the environment), and the voice data thereof are not valid data of the call and not required to be processed and transmitted. At the point, the CPU load of a baseband chip of the mobile phone is decreased, a radio frequency is also in a state of no data transmission, and the system power consumption can be reduced.

In practical applications, the mobile phone also may have stored voiceprint models of multiple users. If the mobile terminal judges that the voice signal collected by the mobile terminal itself does not match with any one of the multiple voiceprint models of the users, the mobile terminal gives up performing the wireless transmission on the collected voice signal or gives up performing the baseband and radio frequency processing and wireless transmission on the collected voice signal, and if the mobile terminal judges that the voice signal collected by the mobile terminal itself matches with at least one of the multiple voiceprint model of the users, performs the baseband and radio frequency processing and wireless transmission on the voice signal.

In the above example, performing the baseband and radio frequency processing on the voice signal refers to performing processing such as audio algorithm processing, digital equalization processing, digital gain processing, AMR coding processing, channel coding processing, modulation processing and radio frequency processing, etc. on the audio signal.

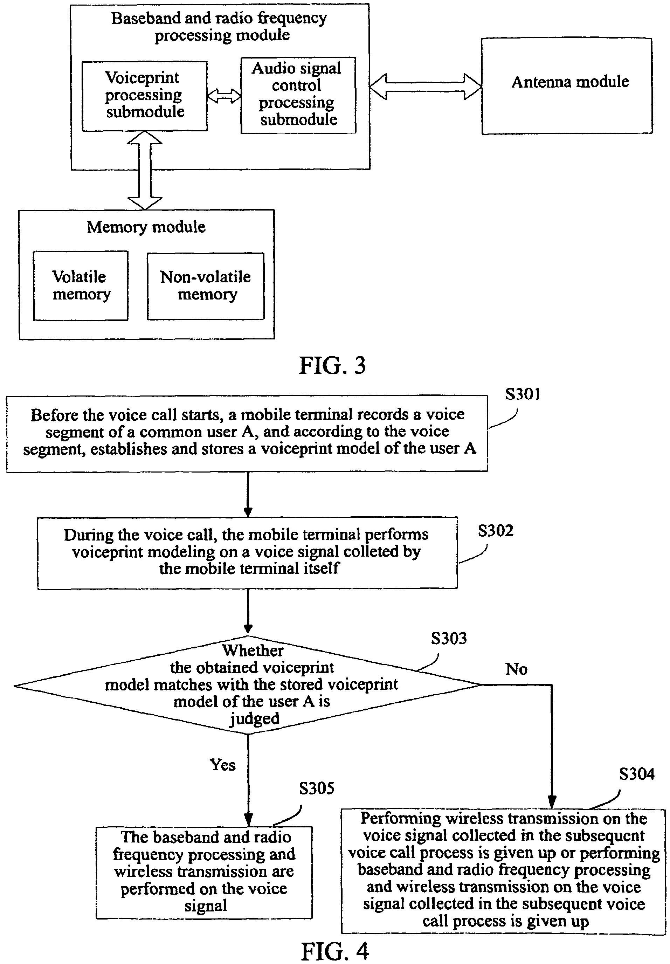

Correspondingly, as shown in FIG. 3, the example also provides a mobile terminal for reducing call power consumption, and the mobile terminal includes: a memory module, a baseband and radio frequency processing module and an antenna module, wherein,
the memory module includes a volatile memory and a non-volatile memory, and is configured to: store a voiceprint model of the user, wherein, the stored voiceprint model of the user specifically includes a voiceprint model of the common user and a voiceprint model of the temporary user;
the baseband and radio frequency processing module includes a voiceprint processing submodule and an audio signal control processing submodule, wherein,
the voiceprint processing submodule is configured to: in a voice call process, perform voiceprint modeling on an audio signal collected by the mobile terminal, judge whether the obtained voiceprint model matches with the stored voiceprint model of the user, and send a judgment result to the audio signal control processing submodule;
the voiceprint processing submodule is further configured to establish the stored voiceprint model of the user in any one or two of the following ways: before a voice call of the mobile terminal starts, according to a voice segment of a user recorded by the mobile terminal, establishing the voiceprint model of the user and storing in a memory of the mobile terminal; after the voice call of the mobile terminal starts, and when a voiceprint model establishment indication sent by the user is received, according to the audio signal collected by the mobile terminal, establishing the voiceprint model of the user and storing in a memory of the mobile terminal;
the voiceprint processing submodule is further configured to: when there are multiple stored voiceprint models of users, when judging that the audio signal collected by the mobile terminal does not match with any one of the multiple voiceprint models of users, determine that the obtained voiceprint model does not match with the pre-stored voiceprint model of the user, and when judging that the audio signal collected by the mobile terminal matches with at least one of the multiple voiceprint models of the users, determine that the obtained voiceprint model matches with the pre-stored voiceprint model of the user; and
the voiceprint processing submodule is further configured to: store the voiceprint model of the common user and the voiceprint model of the temporary user in the non-volatile memory of the mobile terminal; or, store the voiceprint model of the common user in the non-volatile memory of the mobile terminal, and store the voiceprint model of the temporary user in the volatile memory of the mobile terminal.

The audio signal control processing submodule is configured to: when the judgment result is not matching, give up performing wireless transmission on the collected audio signal or give up performing baseband and radio frequency processing and wireless transmission on the collected audio signal; and when the judgment result is matching, perform the baseband and radio frequency processing and wireless transmission on the audio signal.

The audio signal control processing submodule performing the baseband and radio frequency processing on the audio signal refers to: performing audio algorithm processing, digital equalization processing, digital gain processing, AMR coding processing, channel coding processing, modulation processing and radio frequency processing on the audio signal.

The antenna module is configured to: perform wireless transmission on the voice signal which has gone through the baseband and radio frequency processing.

### Specific example 1

In the specific example 1, an execution mode of establishing and storing a voiceprint model of the user before a call starts is mainly described. As shown in FIG. 4, the specific example includes following steps.

In S301, before the voice call starts, a mobile terminal records a voice segment of a common user A, and according to the voice segment, establishes and stores a voiceprint model of the user A.

In S302, during the voice call, the mobile terminal performs voiceprint modeling on an audio signal collected by the mobile terminal itself.

In S303, whether the obtained voiceprint model matches with the stored voiceprint model of the user A is judged.

In S304, if not matching, step S305 is executed, and if matching, S306 is executed.

In S305, performing wireless transmission on the voice signal collected in the subsequent voice call process is given up or performing baseband and radio frequency processing and wireless transmission on the voice signal collected in the subsequent voice call process is given up, and the flow ends.

In S306, the baseband and radio frequency processing and wireless transmission are performed on the voice signal.

### Specific example 2

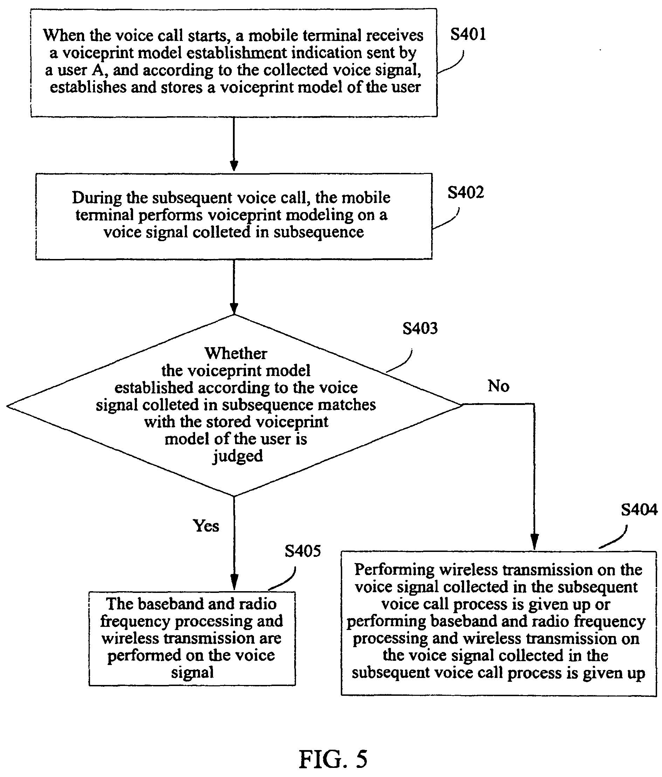

In the specific example 2, an execution mode of establishing and storing a voiceprint model of the user after a call starts is mainly described. As shown in FIG. 5, the specific example includes following steps.

In S401, after the voice call starts, a mobile terminal receives a voiceprint model establishment indication sent by a user A, and according to the collected voice signal (i.e. a voice sent after the user presses the voiceprint model establishment indication), establishes and stores a voiceprint model of the user A.

In S402, during the subsequent voice call, the mobile terminal performs voiceprint modeling on a voice signal collected in subsequence.

In S403, whether the obtained voiceprint model matches with the stored voiceprint model of the user is judged.

In S404, if not matching, step S405 is executed, and if matching, S406 is executed.

In S405, performing wireless transmission on the voice signal collected in the subsequent voice call process is given up or performing baseband and radio frequency processing and wireless transmission on the voice signal collected in the subsequent voice call process is given up, and the flow ends.

In S406, the baseband and radio frequency processing and wireless transmission are performed on the voice signal.

### Specific example 3

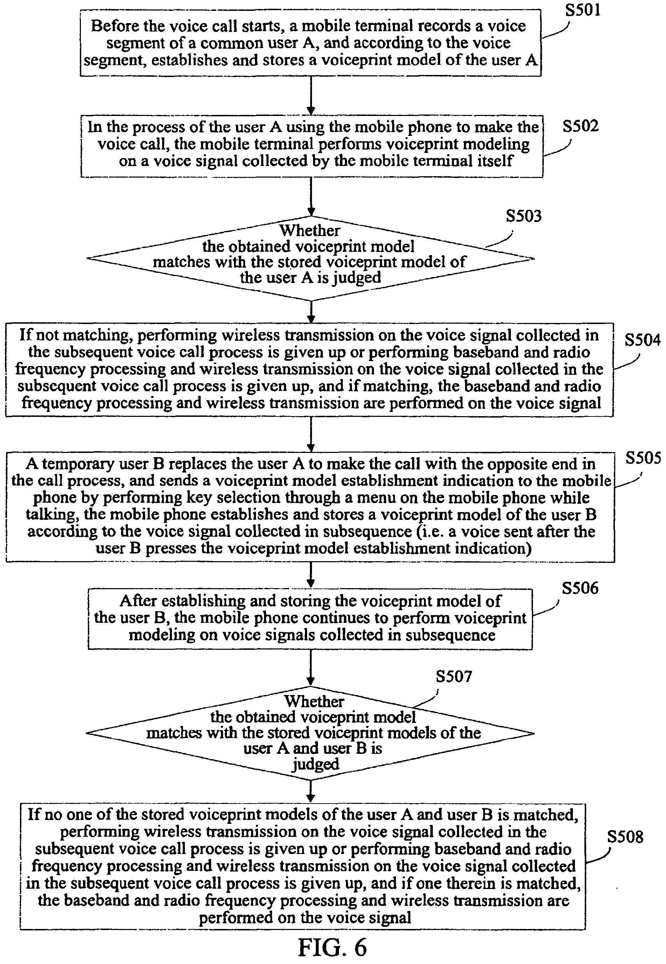

In the specific example 3, an execution mode that a voiceprint model of the user is required to be established and stored before and after a call starts is mainly described. As shown in FIG. 6, the specific example includes following steps.

In S501, before the voice call starts, a mobile terminal records a voice segment of a common user A, and according to the voice segment, establishes and stores a voiceprint model of the user A.

In S502, during the process of the user A using the mobile phone to make the voice call, the mobile terminal performs voiceprint modeling on an audio signal collected by the mobile terminal itself.

In S503, whether the obtained voiceprint model matches with the stored voiceprint model of the user A is judged.

In S504, if not matching, performing wireless transmission on the voice signal collected in the subsequent voice call process is given up or performing baseband and radio frequency processing and wireless transmission on the voice signal collected in the subsequent voice call process is given up, and if matching, the baseband and radio frequency processing and wireless transmission are performed on the voice signal.

In S505, a temporary user B replaces the user A to make the call with the opposite end in the call process, and sends a voiceprint model establishment indication to the mobile phone by performing key selection through a menu on the mobile phone while talking, the mobile phone establishes and stores a voiceprint model of the user B according to the voice signal collected in subsequence (i.e. a voice sent after the user B presses the voiceprint model establishment indication). Within the time range of the mobile phone establishing the voiceprint model for the user B, the baseband and radio frequency processing and wireless transmission are performed on all the collected audio signals.

In S506, after establishing and storing the voiceprint model of the user B, the mobile phone continues to perform voiceprint modeling on voice signals collected in subsequence.

In S507, whether the obtained voiceprint model matches with the stored voiceprint models of the user A and user B is judged.

In S508, if no one of the stored voiceprint models of the user A and user B is matched, performing wireless transmission on the voice signal collected in the subsequent voice call process is given up or performing baseband and radio frequency processing and wireless transmission on the voice signal collected in the subsequent voice call process is given up, and if at least one therein is matched, the baseband and radio frequency processing and wireless transmission are performed on the voice signal.

It can be seen from the above examples, with the method and mobile terminal for reducing call power consumption of the mobile terminal provided by the present invention, by adding one baseband processing module to the existing voice call uplink flow, the voiceprint modeling is performed on the voice signal collected by the mobile terminal, and the voice data of the non-caller are discarded through the model matching, the subsequent baseband and radio frequency processing and/or wireless transmission will not be performed any more, which reduces the processing and transmission for the invalid data, thereby reducing the voice call power consumption of the mobile terminal, extending the battery usage time of the mobile terminal, and enhancing the user experience. Meanwhile, if a the uplink of the mobile phone of the other party of the call also uses the voiceprint processing, a reduction of the data volume received by the current party is brought correspondingly, and the task quantity processed by a downlink flow is also decreased therewith, thereby alleviating the system load, enhancing the effective utilization rate of system resources, and reducing the power consumption of the baseband and radio frequency.

In the present invention, no additional component needs to be added to a hardware system of the mobile phone, and also no change needs to be made on the hardware layout. It is only required to add one baseband processing module to the existing voice call uplink flow on the software, which can be implemented by using an in-built audio system of the mobile phone.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention, which is not used to limit the protection scope of the present invention. According to the contents of the present invention, it can still have other various examples, the skilled familiar to the art can make various corresponding changes and transformations according to the present invention without departing from the scope as defined in the claims.

### Industrial Applicability

With the technical scheme of the present invention, voice call power consumption of the mobile terminal is reduced, battery usage time of the mobile terminal is extended, and user experience is enhanced. Moreover, since transmission of invalid data is reduced, system load is alleviated, effective utilization rate of system resources is improved, and power consumption of the baseband and radio frequency is reduced.

## Claims

1. A method for reducing call power consumption of a mobile terminal, the method comprising:
during a voice call, the mobile terminal performing (S201, S302, S402, S502, S506) voiceprint modeling on an audio signal collected by the mobile terminal itself to obtain a voiceprint model, and judging (S202, S303, S403, S503, S507) whether the obtained voiceprint model matches with a stored voiceprint model of a user; and
if not matching, the mobile terminal giving up (S203, S304, S404, S504, S508) performing wireless transmission on the collected audio signal or giving up performing baseband and radio frequency processing and wireless transmission on the collected audio signal, and if matching, the mobile terminal performing (S203, S305, S405, S504, S508) the baseband and radio frequency processing and wireless transmission on the collected audio signal.

2. The method according to claim 1, wherein
an establishment way of the stored voiceprint model of the user is any one or two of the following ways:
before the voice call starts, the mobile terminal recording (S301, S501) a voice segment of a user, and establishing and storing (S301, S501) the voiceprint model of the user according to the voice segment;
when the voice call starts, and after a voiceprint model establishment indication sent by the user is received, the mobile terminal establishing and storing (S401, S505) the voiceprint model of the user.

3. The method according to claim 1 or 2, wherein
when there are multiple stored voiceprint models of users, if the mobile terminal judges that the audio signal collected by the mobile terminal does not match with any one of the multiple voiceprint models of users, the mobile terminal gives up performing the wireless transmission on the collected audio signal or gives up performing the baseband and radio frequency processing and wireless transmission on the collected audio signal, and if the mobile terminal judges that the audio signal collected by the mobile terminal matches with at least one of the multiple voiceprint models of users, the mobile terminal performs the baseband and radio frequency processing and wireless transmission on the collected audio signal.

4. The method according to claim 1 or 2, wherein
the stored voiceprint model of the user comprises: a voiceprint model of a common user and a voiceprint model of a temporary user;
the method further comprises: the mobile terminal storing the voiceprint model of the common user and the voiceprint model of the temporary user in a non-volatile memory of the mobile terminal; or the mobile terminal storing the voiceprint model of the common user in the non-volatile memory of the mobile terminal, and storing the voiceprint model of the temporary user in a volatile memory of the mobile terminal.

5. The method according to claim 1, wherein
the step of the mobile terminal performing voiceprint modeling on an audio signal collected by the mobile terminal to obtain a voiceprint model, and judging whether the obtained voiceprint model matches with a stored voiceprint model of a user comprises: when the voice call starts, after receiving a voiceprint model establishment indication sent by the user, the mobile terminal firstly establishing and storing the voiceprint model of the user according to the collected audio signal, and then performing the voiceprint modeling on an audio signal collected during a subsequent voice call, and judging whether the obtained voiceprint model matches with any of all the stored voiceprint models of users;
in the step of giving up performing the wireless transmission on the collected audio signal or giving up performing the baseband and radio frequency processing and wireless transmission on the collected audio signal, performing the wireless transmission on the audio signal collected during the subsequent voice call is given up or performing the baseband and radio frequency processing and wireless transmission on the audio signal collected during the subsequent voice call is given up.

6. A mobile terminal for reducing call power consumption, the mobile terminal comprising: a memory module and an antenna module, and further comprising: a baseband and radio frequency processing module, wherein, the baseband and radio frequency processing module comprises a voiceprint processing submodule and an audio signal control processing submodule;
the memory module is configured to: store a voiceprint model of a user;
the voiceprint processing submodule is configured to, during a voice call, perform voiceprint modeling on an audio signal collected by the mobile terminal to obtain a voiceprint model, judge whether the obtained voiceprint model matches with a stored voiceprint model of the user, and send a judgment result to the audio signal control processing submodule; and
the audio signal control processing submodule is configured to: when the judgment result is not matching, give up performing wireless transmission on the collected audio signal or give up performing baseband and radio frequency processing and wireless transmission on the collected audio signal; and when the judgment result is matching, perform the baseband and radio frequency processing and wireless transmission on the collected audio signal.

7. The mobile terminal according to claim 6, wherein
the voiceprint processing submodule is further configured to establish the stored voiceprint model of the user in any one or two of the following ways:
before a voice call of the mobile terminal starts, according to a voice segment of a user recorded by the mobile terminal, establishing the voiceprint model of the user and storing in a memory of the mobile terminal;
after the voice call of the mobile terminal starts, and when a voiceprint model establishment indication sent by the user is received, according to the audio signal collected by the mobile terminal, establishing the voiceprint model of the user and storing in the memory of the mobile terminal.

8. The mobile terminal according to claim 6 or 7, wherein
the voiceprint processing submodule is further configured to: when there are multiple stored voiceprint models of users, when judging that the audio signal collected by the mobile terminal does not match with any one of the multiple voiceprint models of users, determine that the obtained voiceprint model does not match with the pre-stored voiceprint model of the user, and when judging that the audio signal collected by the mobile terminal matches with at least one of the multiple voiceprint models of the users, determine that the obtained voiceprint model matches with the pre-stored voiceprint model of the user.

9. The mobile terminal according to claim 6 or 7, wherein
the stored voiceprint model of the user specifically comprises a voiceprint model of a common user and a voiceprint model of a temporary user, and the memory of the mobile terminal comprises a non-volatile memory and a volatile memory;
the voiceprint processing submodule is further configured to: store the voiceprint model of the common user and the voiceprint model of the temporary user in the non-volatile memory of the mobile terminal; or, store the voiceprint model of the common user in the non-volatile memory of the mobile terminal, and store the voiceprint model of the temporary user in the volatile memory of the mobile terminal.

10. The mobile terminal according to claim 6, wherein
the voiceprint processing submodule is configured to perform the voiceprint modeling on the audio signal collected by the mobile terminal to obtain the voiceprint model during the voice call in the following way: when the voice call starts, and after a voiceprint model establishment indication sent by the user is received, firstly establishing and storing the voiceprint model of the user according to the collected audio signal, and then performing the voiceprint modeling on an audio signal collected during a subsequent voice call to obtain the voiceprint model;
the audio signal control processing submodule is configured to give up performing the wireless transmission on the collected audio signal or give up performing the baseband and radio frequency processing and wireless transmission on the collected audio signal in the following way: giving up performing the wireless transmission on the audio signal collected during the subsequent voice call or giving up performing the baseband and radio frequency processing and wireless transmission on the audio signal collected during the subsequent voice call.

## Patentansprüche

1. Verfahren zum Reduzieren des Anrufleistungsverbrauchs eines mobilen Endgeräts, wobei das Verfahren umfasst, dass:
das mobile Endgerät während eines Sprachanrufs eine Stimmabdruck-Modellerstellung hinsichtlich eines Audiosignals, das durch das mobile Endgerät selbst erfasst wird, durchführt (S201, S302, S402, S502, S506), um ein Stimmabdruckmodell zu erhalten, und beurteilt (S202, S303, S403, S503, S507), ob das erhaltene Stimmabdruckmodell mit einem gespeicherten Stimmabdruckmodell eines Benutzers übereinstimmt; und
wenn keine Übereinstimmung vorliegt, das mobile Endgerät das Durchführen einer drahtlosen Übertragung hinsichtlich des erfassten Audiosignals aufgibt (S203, S304, S404, S504, S508) oder das Durchführen einer Basis-band- und Funkfrequenzverarbeitung und einer drahtlosen Übertragung hinsichtlich des erfassten Audiosignals aufgibt, und wenn eine Übereinstimmung vorliegt, das mobile Endgerät die Basisband- und Funkfrequenzverarbeitung und die drahtlose Übertragung hinsichtlich des erfassten Audiosignals durchführt (S203, S305, S405, S504, S508).

2. Verfahren nach Anspruch 1, wobei
eine Herstellungsart des gespeicherten Stimmabdruckmodells des Benutzers eine beliebige oder zwei der folgenden Arten umfasst:
bevor der Sprachanruf beginnt, zeichnet das mobile Endgerät ein Sprachsegment eines Benutzers auf (S301, S501), und stellt es das Stimmabdruckmodell des Benutzers gemäß dem Sprachsegment her und speichert es dieses (S301, S501);
wenn der Sprachanruf beginnt, und nachdem eine durch den Benutzer gesendete Stimmabdruckmodell-Herstellungsangabe empfangen wurde, stellt das mobile Endgerät das Stimmabdruckmodell des Benutzers her und speichert es dieses (S401, S505).

3. Verfahren nach Anspruch 1 oder 2, wobei
wenn es mehrere gespeicherte Stimmabdruckmodelle von Benutzern gibt, das mobile Endgerät, falls das mobile Endgerät beurteilt, dass das durch das mobile Endgerät erfasste Audiosignal nicht mit irgendeinem der mehreren Stimmabdruckmodelle von Benutzern übereinstimmt, die Durchführung der drahtlosen Übertragung hinsichtlich des erfassten Audiosignals aufgibt oder die Durchführung der Basisband- und Funkfrequenzverarbeitung und der drahtlosen Übertragung hinsichtlich des erfassten Audiosignals aufgibt, und das mobile Endgerät, falls das mobile Endgerät beurteilt, dass das durch das mobile Endgerät erfasste Audiosignal mit zumindest einem der mehreren Stimmabdruckmodelle von Benutzern übereinstimmt, die Basisband- und Funkfrequenzverarbeitung und die drahtlose Übertragung hinsichtlich des erfassten Audiosignals durchführt.

4. Verfahren nach Anspruch 1 oder 2, wobei
das gespeicherte Stimmabdruckmodell des Benutzers umfasst: ein Stimmabdruckmodell eines üblichen Benutzers und ein Stimmabdruckmodell eines temporären Benutzers;
das Verfahren ferner umfasst, dass: das mobile Endgerät das Stimmabdruckmodell des üblichen Benutzers und das Stimmabdruckmodell des temporären Benutzers in einem nicht flüchtigen Speicher des mobilen End-geräts speichert; oder das mobile Endgerät das Stimmabdruckmodell des üblichen Benutzers in dem nicht flüchtigen Speicher des mobilen Endgeräts speichert und das Stimmabdruckmodell des temporären Benutzers in einem flüchtigen Speicher des mobilen Endgeräts speichert.

5. Verfahren nach Anspruch 1, wobei
der Schritt, dass das mobile Endgerät eine Stimmabdruck-Modellerstellung hinsichtlich eines durch das mobile Endgerät erfassten Audiosignals durchführt, um ein Stimmabdruckmodell zu erhalten, und beurteilt, ob das erhaltene Stimmabdruckmodell mit einem gespeicherten Stimmabdruckmodell eines Benutzers übereinstimmt, umfasst, dass: wenn der Sprachanruf beginnt, das mobile Endgerät, nachdem eine durch den Benutzer gesendete Stimmabdruckmodell-Herstellungsangabe empfangen wurde, zuerst das Stimmabdruckmodell des Benutzers gemäß dem erfassten Audiosignal herstellt und speichert und dann die Stimmabdruck-Modellerstellung hinsichtlich eines während eines nachfolgenden Sprachanrufs erfassten Audiosignals durchführt, und beurteilt, ob das erhaltene Stimmabdruckmodell mit irgendeinem aller gespeicherten Stimmabdruckmodelle von Benutzern übereinstimmt;
in dem Schritt, in dem eine Durchführung der drahtlosen Übertragung hinsichtlich des erfassten Audiosignals aufgegeben wird oder eine Durchführung der Basisband- und Funkfrequenzverarbeitung und der drahtlosen Übertragung hinsichtlich des erfassten Audiosignals aufgegeben wird, die Durchführung der drahtlosen Übertragung hinsichtlich des während des nachfolgenden Sprachanrufs erfassten Audiosignals aufgegeben wird oder die Durchführung der Basisband- und Funkfrequenzverarbeitung und der drahtlosen Übertragung hinsichtlich des während des nachfolgenden Sprachanrufs erfassten Audiosignals aufgegeben wird.

6. Mobiles Endgerät zum Reduzieren des Anrufleistungsverbrauchs, wobei das mobile Endgerät umfasst: ein Speichermodul und ein Antennenmodul, und ferner umfassend: ein Basisband- und Funkfrequenzverarbeitungsmodul, wobei das Basisband- und Funkfrequenzverarbeitungsmodul ein Stimmabdruckverarbeitungs-Submodul und ein Audiosignalsteuerungsverarbeitungs-Submodul umfasst;
das Speichermodul ausgestaltet ist, um: ein Stimmabdruckmodell eines Benutzers zu speichern;
das Stimmabdruckverarbeitungs-Submodul ausgestaltet ist, um während eines Sprachanrufs eine Stimmabdruck-Modellerstellung hinsichtlich eines durch das mobile Endgerät erfassten Audiosignals durchzuführen, um ein Stimmabdruckmodell zu erhalten, zu beurteilen, ob das erhaltene Stimmabdruckmodell mit einem gespeicherten Stimmabdruckmodell des Benutzers übereinstimmt, und ein Beurteilungsergebnis an das Audiosignalsteuerungsverarbeitungs-Submodul zu senden; und
das Audiosignalsteuerungsverarbeitungs-Submodul ausgestaltet ist, um: wenn das Beurteilungsergebnis keine Übereinstimmung umfasst, das Durchführen einer drahtlosen Übertragung hinsichtlich des erfassten Audiosignals aufzugeben oder das Durchführen einer Basisband- und Funkfrequenzverarbeitung und einer drahtlosen Übertragung hinsichtlich des erfassten Audiosignals aufzugeben; und wenn das Beurteilungsergebnis eine Übereinstimmung umfasst, die Basisband- und Funkfrequenzverarbeitung und die drahtlose Übertragung hinsichtlich des erfassten Audiosignals durchzuführen.

7. Mobiles Endgerät nach Anspruch 6, wobei
das Stimmabdruckverarbeitungs-Submodul ferner ausgestaltet ist, um das gespeicherte Stimmabdruckmodell des Benutzers auf eine beliebige oder zwei der folgenden Arten herzustellen:
bevor ein Sprachanruf des mobilen Endgeräts beginnt, wird gemäß einem durch das mobile Endgerät aufgezeichneten Sprachsegment eines Benutzers das Stimmabdruckmodell des Benutzers hergestellt und in einem Speicher des mobilen Endgeräts gespeichert;
nachdem der Sprachanruf des mobilen Endgeräts begonnen hat, und wenn eine durch den Benutzer gesendete Stimmabdruckmodell-Herstellungsangabe empfangen wird, wird gemäß dem durch das mobile Endgerät erfassten Audiosignal das Stimmabdruckmodell des Benutzers hergestellt und in dem Speicher des mobilen Endgeräts gespeichert.

8. Mobiles Endgerät nach Anspruch 6 oder 7, wobei das Stimmabdruckverarbeitungs-Submodul ferner ausgestaltet ist, um:
wenn es mehrere gespeicherte Stimmabdruckmodelle von Benutzern gibt, wenn beurteilt wird, dass das durch das mobile Endgerät erfasste Audiosignal nicht mit irgendeinem der mehreren Stimmabdruckmodelle von Benutzern übereinstimmt, zu ermitteln, dass das erhaltene Stimmabdruckmodell nicht mit dem vorab gespeicherten Stimmabdruckmodell des Benutzers übereinstimmt, und wenn beurteilt wird, dass das durch das mobile Endgerät erfasste Audiosignal mit zumindest einem der mehreren Stimmabdruckmodelle der Benutzer übereinstimmt, zu ermitteln, dass das erhaltene Stimmabdruckmodell mit dem vorab gespeicherten Stimmabdruckmodell des Benutzers übereinstimmt.

9. Mobiles Endgerät nach Anspruch 6 oder 7, wobei das gespeicherte Stimmabdruckmodell des Benutzers im Speziellen ein Stimmabdruckmodell eines üblichen Benutzers und ein Stimmabdruckmodell eines temporären Benutzers umfasst, und der Speicher des mobilen Endgeräts einen nicht flüchtigen Speicher und einen flüchtigen Speicher umfasst;
das Stimmabdruckverarbeitungs- Submodul ferner ausgestaltet ist, um: das Stimmabdruckmodell des üblichen Benutzers und das Stimmabdruckmodell des temporären Benutzers in dem nicht flüchtigen Speicher des mobilen Endgeräts zu speichern; oder das Stimmabdruckmodell des üblichen Benutzers in dem nicht flüchtigen Speicher des mobilen Endgeräts zu speichem und das Stimmabdruckmodell des temporären Benutzers in dem flüchtigen Speicher des mobilen Endgeräts zu speichern.

10. Mobiles Endgerät nach Anspruch 6, wobei
das Stimmabdruckverarbeitungs- Submodul ausgestaltet ist, um die Stimmabdruck-Modellerstellung hinsichtlich des durch das mobile Endgerät erfassten Audiosignals zum Erhalten des Stimmabdruckmodells während des Sprachanrufs auf die folgende Art durchzuführen: wenn der Sprachanruf beginnt, und nachdem eine durch den Benutzer gesendete Stimmabdruck-modell-Herstellungsangabe empfangen wurde, wird zuerst das Stimmabdruckmodell des Benutzers gemäß dem erfassten Audiosignal hergestellt und gespeichert, und dann wird die Stimmabdruck-Modellerstellung hinsichtlich eines während eines nachfolgenden Sprachanrufs erfassten Audiosignals durchgeführt, um das Stimmabdruckmodell zu erhalten; das Audiosignalsteuerungsverarbeitungs-Submodul ausgestaltet ist, um die Durchführung der drahtlosen Übertragung hinsichtlich des erfassten Audiosignals aufzugeben oder die Durchführung der Basisband- und Funkfrequenzverarbeitung und der drahtlosen Übertragung hinsichtlich des erfassten Audiosignals aufzugeben, und zwar auf die folgende Art: Aufgeben der Durchführung der drahtlosen Übertragung hinsichtlich des während des nachfolgenden Sprachanrufs erfassten Audiosignals oder Aufgeben der Durchführung der Basisband- und Funkfrequenzverarbeitung und der drahtlosen Übertragung hinsichtlich des während des nachfolgenden Sprachanrufs erfassten Audiosignals.

## Revendications

1. Procédé destiné à réduire la consommation d'énergie d'appel d'un terminal mobile, le procédé consistant à :
pendant un appel vocal, faire en sorte que le terminal mobile exécute (S201, S302, S402, S502, S506) une modélisation d'empreinte vocale sur un signal audio collecté par le terminal mobile lui-même afin d'obtenir un modèle d'empreinte vocale, et juge (S202, S303, S403, S503, S507) si le modèle d'empreinte vocale obtenu concorde avec un modèle d'empreinte vocale stocké d'un utilisateur ; et
en cas de non-concordance, faire en sorte que le terminal mobile abandonne (S203, S304, S404, S504, S508) l'exécution d'une transmission sans fil sur le signal audio collecté ou abandonne l'exécution d'un traitement en bande de base et radiofréquence et d'une transmission sans fil sur le signal audio collecté, et en cas de concordance, faire en sorte que le terminal mobile exécute (S203, S305, S405, S504, S508) le traitement en bande de base et radiofréquence et la transmission sans fil sur le signal audio collecté.

2. Procédé selon la revendication 1, dans lequel
une méthode permettant d'établir le modèle d'empreinte vocale stocké de l'utilisateur comprend l'une quelconque ou deux des méthodes suivantes :
avant que l'appel vocal commence, faire en sorte que le terminal mobile enregistre (S301, S501) un segment vocal d'un utilisateur, et établisse et stocke (S301, S501) le modèle d'empreinte vocale de l'utilisateur selon le segment vocal ;
lorsque l'appel vocal commence, et après qu'une indication d'établissement de modèle d'empreinte vocale envoyée par l'utilisateur a été reçue, faire en sorte que le terminal mobile établisse et stocke (S401, S505) le modèle d'empreinte vocale de l'utilisateur.

3. Procédé selon la revendication 1 ou 2, dans lequel
lorsqu'il existe de multiples modèles d'empreinte vocale stockés d'utilisateurs, si le terminal mobile juge que le signal audio collecté par le terminal mobile ne concorde pas avec l'un quelconque des modèles d'empreinte vocale d'utilisateurs, le terminal mobile abandonne l'exécution de la transmission sans fil sur le signal audio collecté ou abandonne l'exécution du traitement en bande de base et radiofréquence et la transmission sans fil sur le signal audio collecté, et si le terminal mobile juge que le signal audio collecté par le terminal mobile concorde avec au moins l'un des modèles d'empreinte vocale d'utilisateurs, le terminal mobile exécute le traitement en bande de base et radiofréquence et la transmission sans fil sur le signal audio collecté.

4. Procédé selon la revendication 1 ou 2, dans lequel le modèle d'empreinte vocale stocké de l'utilisateur comprend : un modèle d'empreinte vocale d'un utilisateur habituel et un modèle d'empreinte vocale d'un utilisateur temporaire ;
le procédé consiste en outre à : faire en sorte que le terminal mobile stocke le modèle d'empreinte vocale de l'utilisateur habituel et le modèle d'empreinte vocale de l'utilisateur temporaire dans une mémoire non volatile du terminal mobile ; ou faire en sorte que le terminal mobile stocke le modèle d'empreinte vocale de l'utilisateur habituel dans la mémoire non volatile du terminal mobile, et stocke le modèle d'empreinte vocale de l'utilisateur temporaire dans une mémoire volatile du terminal mobile.

5. Procédé selon la revendication 1, dans lequel
l'étape consistant à faire en sorte que le terminal mobile exécute une modélisation d'empreinte vocale sur un signal audio collecté par le terminal mobile afin d'obtenir un modèle d'empreinte vocale, et juge si le modèle d'empreinte vocale obtenu concorde avec un modèle d'empreinte vocale stocké d'un utilisateur consiste à : lorsque l'appel vocal commence, après réception d'une indication d'établissement de modèle d'empreinte vocale envoyée par l'utilisateur, faire en sorte que le terminal mobile établisse et stocke en premier lieu le modèle d'empreinte vocale de l'utilisateur selon le signal audio collecté, puis exécute la modélisation de l'empreinte vocale sur un signal audio collecté pendant un appel vocal ultérieur, et juge si le modèle d'empreinte vocale obtenu concorde avec l'un quelconque de la totalité des modèles d'empreinte vocale stockés d'utilisateurs ;
lors de l'étape consistant à abandonner l'exécution de la transmission sans fil sur le signal audio collecté ou à abandonner l'exécution du traitement en bande de base et radiofréquence et la transmission sans fil sur le signal audio collecté, l'exécution de la transmission sans fil sur le signal audio collecté pendant l'appel vocal ultérieur est abandonnée ou l'exécution du traitement en bande de base et radiofréquence et la transmission sans fil sur le signal audio collecté pendant l'appel vocal ultérieur sont abandonnées.

6. Terminal mobile destiné à réduire la consommation d'énergie d'appel, le terminal mobile comprenant :
un module de mémoire et un module d'antenne, et comprenant en outre : un module de traitement en bande de base et radiofréquence, dans lequel le module de traitement en bande de base et radiofréquence comprend un sous-module de traitement d'empreinte vocale et un sous-module de traitement de commande de signal audio ;
le module de mémoire est configuré pour : stocker un modèle d'empreinte vocale d'un utilisateur ;
le sous-module de traitement d'empreinte vocale est configuré pour, pendant un appel vocal, exécuter une modélisation d'empreinte vocale sur un signal audio collecté par le terminal mobile afin d'obtenir un modèle d'empreinte vocale, juger si le modèle d'empreinte vocale obtenu concorde avec un modèle d'empreinte vocale stocké de l'utilisateur, et envoyer un résultat de jugement au sous-module de traitement de commande de signal audio ; et
le sous-module de traitement de commande de signal audio est configuré pour : lorsque le résultat de jugement est une non-concordance, abandonner l'exécution d'une transmission sans fil sur le signal audio collecté ou abandonner l'exécution d'un traitement en bande de base et radiofréquence et la transmission sans fil sur le signal audio collecté ; et lorsque le résultat de jugement est une concordance, exécuter le traitement en bande de base et radiofréquence et la transmission sans fil sur le signal audio collecté.

7. Terminal mobile selon la revendication 6, dans lequel
le sous-module de traitement d'empreinte vocale est en outre configuré pour établir le modèle d'empreinte vocale stocké de l'utilisateur par l'une quelconque ou deux des méthodes suivantes :
avant qu'un appel vocal du terminal mobile commence, selon un segment vocal d'un utilisateur enregistré par le terminal mobile, établir le modèle d'empreinte vocale de l'utilisateur et le stocker dans une mémoire du terminal mobile ;
après que l'appel vocal du terminal mobile a commencé, et lorsqu'une indication d'établissement de modèle d'empreinte vocale envoyée par l'utilisateur a été reçue, selon le signal audio collecté par le terminal mobile, établir le modèle d'empreinte vocale de l'utilisateur et le stocker dans la mémoire du terminal mobile.

8. Terminal mobile selon la revendication 6 ou 7, dans lequel
le sous-module de traitement d'empreinte vocale est en outre configuré pour : lorsqu'il existe de multiples modèles d'empreinte vocale stockés d'utilisateurs, lorsqu'il est jugé que le signal audio collecté par le terminal mobile ne concorde pas avec l'un quelconque des modèles d'empreinte vocale d'utilisateurs, déterminer que le modèle d'empreinte vocale obtenu ne concorde pas avec le modèle d'empreinte vocale préalablement stocké de l'utilisateur, et lorsqu'il est jugé que le signal audio collecté par le terminal mobile concorde avec au moins l'un des modèles d'empreinte vocale des utilisateurs, déterminer que le modèle d'empreinte vocale obtenu concorde avec le modèle d'empreinte vocale préalablement stocké de l'utilisateur.

9. Terminal mobile selon la revendication 6 ou 7, dans lequel
le modèle d'empreinte vocale stocké de l'utilisateur comprend plus précisément un modèle d'empreinte vocale d'un utilisateur habituel et un modèle d'empreinte vocale d'un utilisateur temporaire, et la mémoire du terminal mobile comprend une mémoire non volatile et une mémoire volatile ;
le sous-module de traitement d'empreinte vocale est en outre configuré pour : stocker le modèle d'empreinte vocale de l'utilisateur habituel et le modèle d'empreinte vocale de l'utilisateur temporaire dans la mémoire non volatile du terminal mobile ; ou stocker le modèle d'empreinte vocale de l'utilisateur habituel dans la mémoire non volatile du terminal mobile, et stocker le modèle d'empreinte vocale de l'utilisateur temporaire dans la mémoire volatile du terminal mobile.

10. Terminal mobile selon la revendication 6, dans lequel
le sous-module de traitement d'empreinte vocale est configuré pour exécuter la modélisation d'empreinte vocale sur le signal audio collecté par le terminal mobile afin d'obtenir le modèle d'empreinte vocale pendant l'appel vocal par la méthode suivante : lorsque l'appel vocal commence, et après qu'une indication d'établissement de modèle d'empreinte vocale envoyée par l'utilisateur a été reçue, établir et stocker en premier lieu le modèle d'empreinte vocale de l'utilisateur selon le signal audio collecté, puis exécuter la modélisation de l'empreinte vocale sur un signal audio collecté pendant un appel vocal ultérieur afin d'obtenir le modèle d'empreinte vocale ;
le sous-module de traitement de commande de signal audio est configuré pour abandonner l'exécution de la transmission sans fil sur le signal audio collecté ou abandonner l'exécution du traitement en bande de base et radiofréquence et la transmission sans fil sur le signal audio collecté par la méthode suivante : abandonner l'exécution de la transmission sans fil sur le signal audio collecté pendant l'appel vocal ultérieur ou abandonner l'exécution du traitement en bande de base et radiofréquence et la transmission sans fil sur le signal audio collecté pendant l'appel vocal ultérieur.
